# FASCICULE DE BREVET EUROPEEN

(11) **EP 2 022 544 B1**
(45) Date de publication et mention de la délivrance du brevet: **22.10.2014**
(21) Numéro de dépôt: 08354038.5
(22) Date de dépôt: 13.06.2008
(51) Int. Cl.: B62B 13/04, A63C 5/16, A63C 5/00, A63C 5/06, B62B 17/04

(54) **Dispositif de ski assis à mécanisme de suspension réglable**
Skibob-Vorrichtung mit regulierbarer Aufhängung
Sit-skiing device with adjustable suspension

(30) Priorité: 31.07.2007 FR 0705584
(43) Date de publication de la demande: 11.02.2009
(73) Titulaire: Tessier, 73660 Saint Rémy de Maurienne (FR)
(72) Inventeur: Tessier, Pierre, 73660 Saint Rémy de Maurienne (FR)
(74) Mandataire: Hecké, Gérard

(56) Documents cités:
- DE-U1- 29 816 692
- FR-A- 2 611 515
- FR-A- 2 770 142
- FR-A- 2 813 021
- GB-A- 2 340 739
- US-A- 6 019 380

## Description

### Domaine technique de l'invention

L'invention est relative à un dispositif de suspension d'un fauteuil de ski assis, comprenant :
- un châssis de support d'un siège monté sur un sabot (14) au moyen d'une cinématique à biellettes formant un quadrilatère déformable,
- un élément amortisseur piloté par un verrou de manoeuvre destiné à occuper une position verrouillée ou une position déverrouillée, respectivement lors de la suspension en position de ski, et lors du relevage du châssis en position de télésiège.

### État de la technique

Un dispositif du genre mentionné est décrit dans le document FR-2813021. L'augmentation du niveau de performance en « ski assis » demande une technicité de plus en plus pointue, et la cinématique doit être adaptée en fonction de différents critères :
- Des quatre différentes disciplines de compétition (slalom, géant, super G, descente).
- De sa façon de skier.
- Du type de piste et de neige.
- Du type de skis utilisés.
Le choix des paramètres est figé à la construction en usine, et ne peut plus être changé par la suite par l'utilisateur, à part la dureté de l'amortisseur. Il faut alors prévoir toute une gamme d'appareils répondant à ces différents critères, mais au détriment de la standardisation et du stockage.

Le document GB-2340739 se rapporte à un dispositif de fauteuil pour ski nautique, comprenant un amortisseur intercalé entre un point fixe d'une embase solidaire du ski, et une paire de leviers basculants de support du fauteuil. Tout mouvement de relevage du fauteuil est rendu impossible.

### Objet de l'invention

L'objet de l'invention consiste à réaliser un dispositif de suspension d'un fauteuil de ski assis, permettant d'utiliser une cinématique standardisée facilement adaptable en fonction du choix des paramètres de suspension et d'amortissement.

Le dispositif selon l'invention est caractérisé en ce que le châssis est formé par l'assemblage de deux flasques parallèles symétriques par rapport au plan médian vertical, chaque flasque comportant une pluralité de trous de réglage du positionnement des extrémités amont des biellettes sur le châssis, que les extrémités aval des biellettes sont articulées sur une embase solidaire du sabot, et que l'axe supérieur de l'élément amortisseur se déplace après déverrouillage du verrou dans une glissière ménagée dans chaque flasque.

Selon un mode de réalisation préférentiel, les flasques du châssis sont en forme de L, composés chacun d'une aile supérieure portant le siège, et d'une aile inférieure pour le maintien d'une coque d'appui des jambes. L'embase est équipée de deux jambes conformées en V, l'une des jambes étant dotée d'une troisième série de trous de réglage utilisés pour la fixation des extrémités aval des biellettes.

L'embase est de préférence réglable par un coulissement le long d'un rail de guidage longitudinal.

La présence de différents points de fixation des biellettes et de l'élément amortisseur permet d'utiliser une cinématique standardisée, améliorant la gestion de production en usine, et facilitant le réglage par l'utilisateur lui-même pour le choix des paramètres.

D'autres caractéristiques techniques peuvent être utilisées isolément ou en combinaison :
- la base de l'élément amortisseur est ajustable à différents points de fixation de l'embase pour le réglage du rapport d'amortissement ;
- le siège est fixé sur un premier support articulé coopérant avec des premières barrettes de réglage pour ajuster l'angle d'assise du skieur ;
- la coque est solidarisée à un deuxième support articulé coopérant avec des deuxièmes barrettes de réglage pour ajuster l'angle des jambes du skieur ;

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente une vue schématique de profil du dispositif de ski assis à mécanisme de suspension réglable selon l'invention, les biellettes étant dans une première position de réglage pour une avancée maximum lors de l'écrasement de la suspension, et l'élément amortisseur étant dans l'état détendu ;
- la figure 2 est une vue identique de la figure 1, l'élément amortisseur étant dans l'état comprimé ;
- les figures 3 et 4 montrent des vues identiques respectivement des figures 1 et 2, dans une deuxième position de réglage des biellettes ;
- les figures 5 et 6 montrent des vues identiques respectivement des figures 1 et 2, dans une troisième position de réglage des biellettes ;
- les figures 7 et 8 sont des vues de face et de profil du dispositif de ski assis représenté en position prise de télésiège ;
- la figure 9 est une vue de la cinématique avec un réglage de l'angle d'assise, et de l'angle de la coque d'appui des jambes ;
- la figure 10 montre le réglage de l'embase le long du rail du sabot pour ajuster le centre de gravité du dispositif ;
- les figures 11 et 12 sont des vues en perspective du dispositif de ski assis pour une avancée minimum lors de l'écrasement de la suspension, et respectivement pour le montage du sabot sur un ski unique, ou deux skis.

### Description d'un mode préférentiel de l'invention

Sur les figures, le mécanisme de suspension 10 d'un dispositif de ski assis, notamment pour personnes handicapées, comporte un châssis 11 de support d'un siège 12 et d'une coque 13 d'appui des jambes, l'ensemble étant monté sur un sabot 14 au moyen d'une cinématique 15 à biellettes 16, 17 articulées formant un quadrilatère déformable.

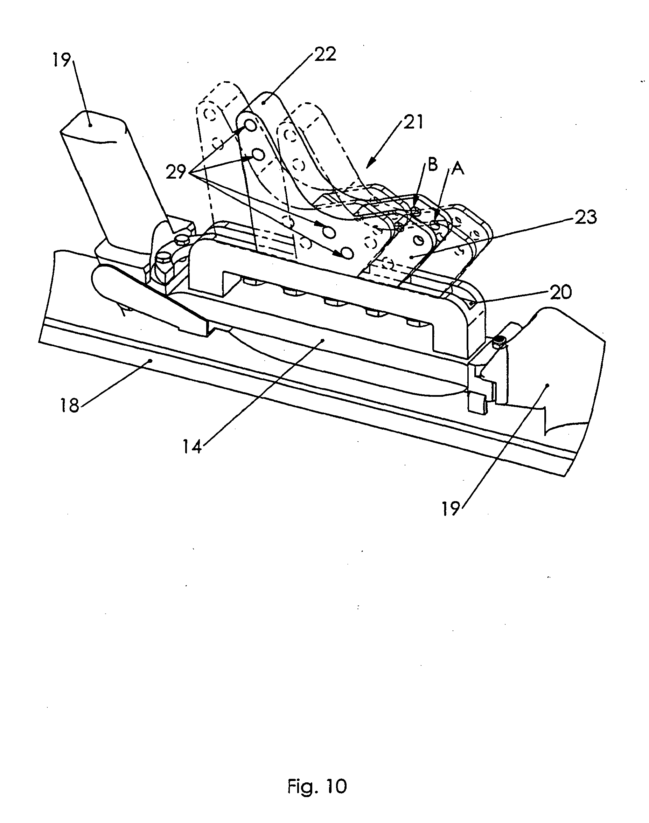

Le sabot 14 est solidarisé au ski 18 par une fixation de ski standard 19, et comporte un rail 20 longitudinal de logement d'une embase 21, laquelle est équipée de deux jambes 22, 23 formant un V. L'embase 21 peut être montée fixe sur le sabot 14, ou être réglable par coulissement le long du rail 20 comme illustrée à la figure 10.

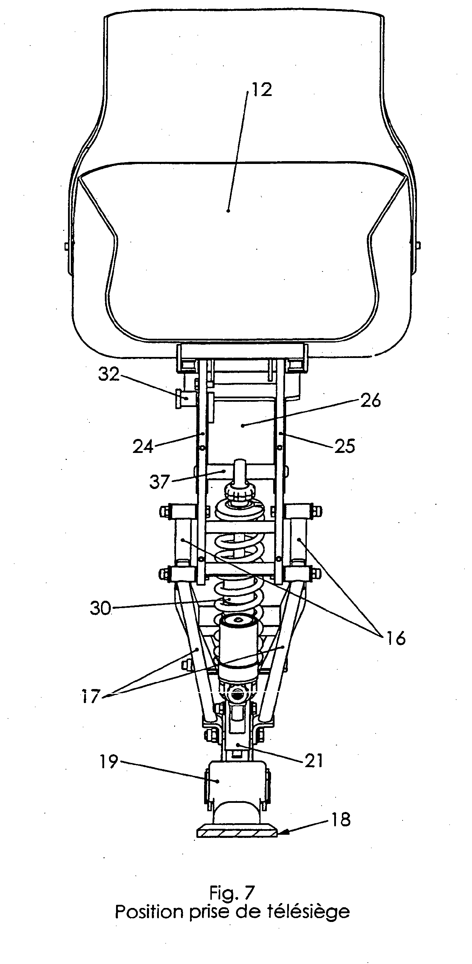

Le châssis 11 est constitué par un assemblage de deux flasques 24, 25 parallèles (figure 7) et identiques, ayant chacun une forme en L. L'aile supérieure du L de chaque flasque 24, 25 porte le siège 12, et la coque 13 d'appui des jambes est assujettie aux deux ailes inférieures. Les deux flasques 24, 25 sont symétriques par rapport au plan médian vertical, en étant écartées transversalement l'une de l'autre par un intervalle 26.

Chaque flasque 24, 25 du châssis 11 comporte :
- une première série de trous de réglage 27 constituant des points de fixation des extrémités amont des deux biellettes supérieures 16 ;
- une deuxième série de trous de réglage 28 constituant des points de fixation des extrémités amont des deux biellettes inférieures 17.

La jambe 22 de l'embase 21 est dotée d'une troisième série de trous de réglage 29 formant des points de fixation des extrémités aval des biellettes 16, 17.

Un élément amortisseur 30 est intercalé entre le châssis 11 et l'embase 21 pour assurer la suspension du dispositif de ski assis. Tout type d'élément amortisseur peut être utilisé, notamment à ressort, pneumatique ou hydraulique, avec des moyens pour ajuster la dureté d'amortissement.

L'axe supérieur 37 de l'élément amortisseur 30 est déplaçable de haut en bas et vice versa, le long d'une glissière 31 d'une ouverture oblongue ménagée dans chaque flasque 24, 25. Le déplacement vers le bas est opéré lors du relevage lorsque le skieur assis exerce une pression au sol avec ses bâtons spécifiques pour prendre le télésiège. En position de ski assis, un verrou 32 de manoeuvre maintient l'axe supérieur de l'élément amortisseur 30 en haut de la glissière 31. Le déverrouillage du verrou 32 permet l'abaissement de l'axe supérieur de l'élément amortisseur 30.

Le fonctionnement de la cinématique 15 va dépendre :
- De la différence des entraxes entre les points de fixations des biellettes 16, 17 sur l'embase 21.
- De la différence des entraxes entre les points de fixations des biellettes 16, 17 sur le châssis 11.
- De l'inclinaison de départ des biellettes 16, 17 par rapport à l'horizontale.
- De la différence de longueur entre les deux biellettes 16 17.

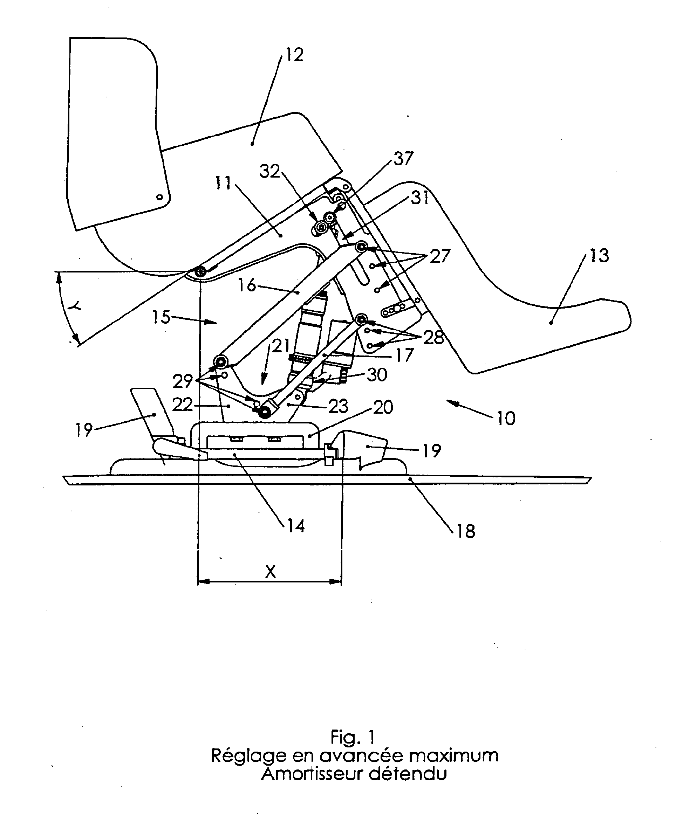

Le choix de ces paramètres va permettre :
- D'avoir une bascule (y'-y) du siège 12 (voir figures 1-6) plus ou moins importante lors de l'écrasement de l'élément amortisseur 30.
- De faire avancer plus ou moins le centre de gravité du skieur (x'-x) lors de l'écrasement l'élément amortisseur 30.
- De relever correctement l'arrière du châssis 11 pour prendre les télésièges.

Le dispositif de ski assis selon l'invention permet différents choix de réglage en modifiant les paramètres concernant la différence des entraxes entre les points de fixations des biellettes 16, 17 sur le châssis 11 et sur l'embase 21, ainsi que l'inclinaison de départ des biellettes 16, 17 par rapport à l'horizontale. La différence de longueur entre les deux biellettes 16 17, restent figés.

La présence des deux séries de trous 27, 28 de réglage dans les flasques parallèles 24, 25 du châssis 11 permet d'obtenir différents points de fixations pour les biellettes 16, 17.

Voir l'exemple de trois configurations avec les figures 1 et 2, 3 et 4, 5 et 6 montrant respectivement l'élément amortisseur 30 détendu et comprimé :

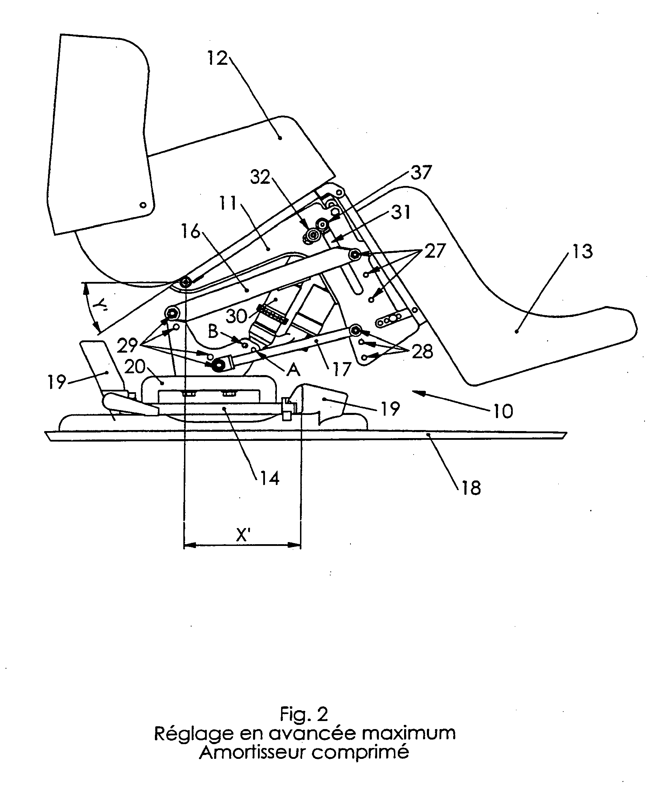

Sur les figures 1 et 2, l'extrémité amont des deux biellettes supérieures 16 est fixée dans le premier trou 27 de la première série à partir du haut. Celle des deux biellettes inférieures 17 est fixée dans le premier trou 28 de la deuxième série.

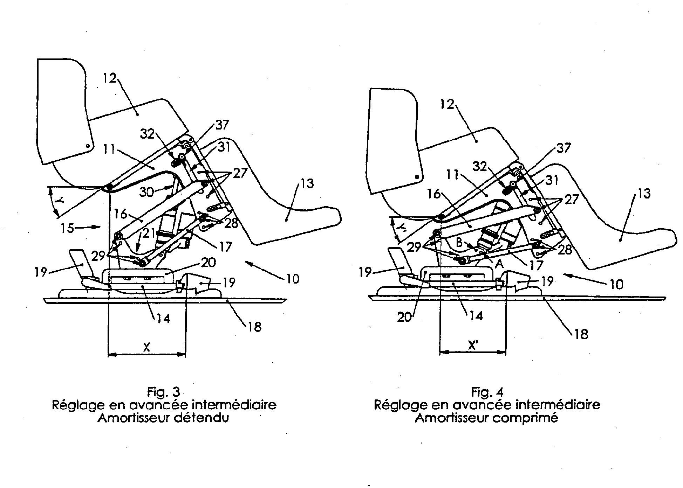

Sur les figures 3 et 4, l'extrémité amont des deux biellettes supérieures 16 est fixée dans le deuxième trou 27, et celle des deux biellettes inférieures 17 est fixée dans le deuxième trou 28.

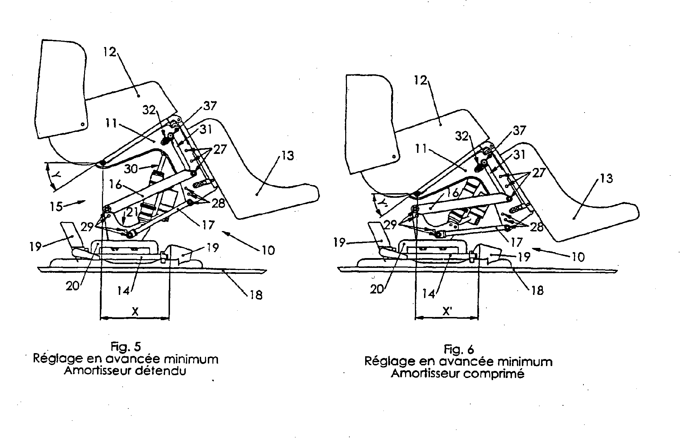

Sur les figures 5 et 6, l'extrémité amont des deux biellettes supérieures 16 est fixée dans le troisième trou 27, et celle des deux biellettes inférieures 17 est fixée dans le troisième trou 28.

### Rapport d'amortissement :

Les différents choix de réglage des biellettes 16, 17 de la cinématique 15 modifient le rapport d'amortissement, c'est-à-dire la course du châssis 11 divisée par la course de l'élément amortisseur 30. On peut remédier à ce problème en proposant plusieurs points de fixations à la base de l'élément amortisseur 30. Ceci permet d'incliner l'élément amortisseur 30 de différentes façons et rétablir le rapport souhaité en fonction de la configuration de cinématique. Voir sur la figure 2, l'exemple de deux possibilités A et B de fixation de l'extrémité inférieure de l'élément amortisseur 30 sur la jambe 23 de l'embase 21.

### Prise de télésiège:

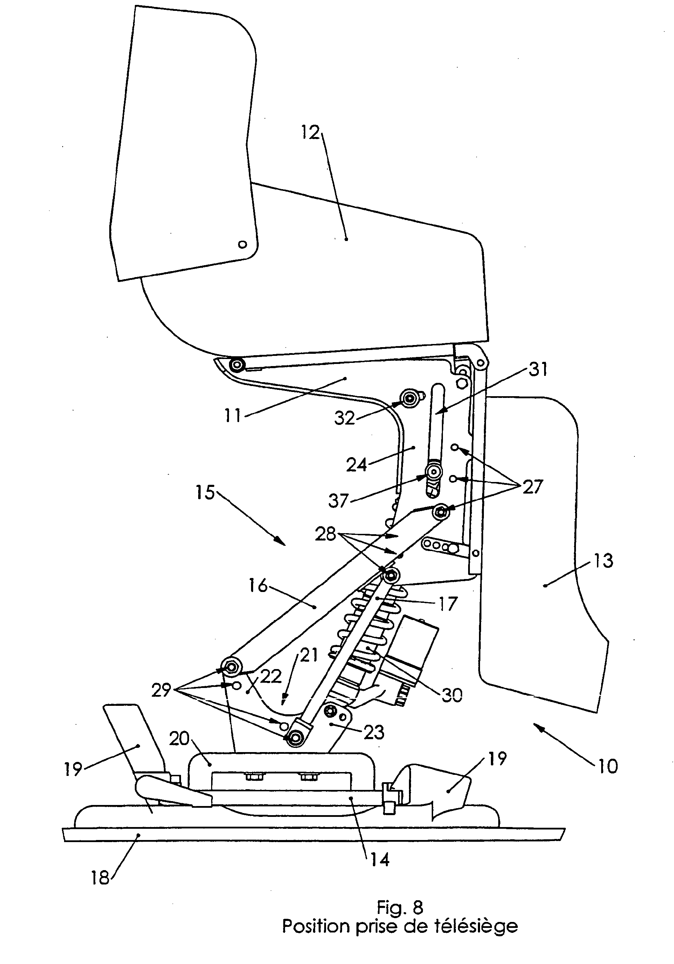

Toutes les configurations permettent à la cinématique 15 de relever l'arrière du châssis 11 pour prendre le télésiège. Sur la figure 8, la glissière 31 dans chaque flasque 24, 25 permet à l'axe supérieur 37 de l'élément amortisseur 30 de coulisser du haut vers le bas au moment du relevage lorsque le skieur assis exerce une pression au sol avec ses bâtons spécifiques. Il suffit de déverrouiller le verrou 32 pour autoriser ce mouvement de coulissement.

En position « ski », le verrou 32 maintient l'axe supérieur 37 de l'élément amortisseur 30 en haut de la glissière 31.

### Autres réglages :

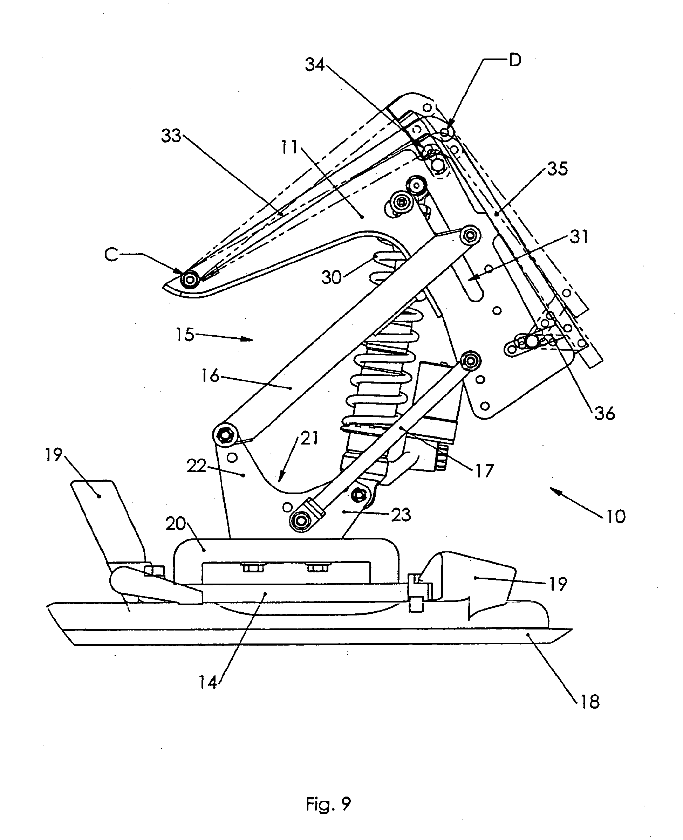

En référence à la figure 9, il est possible d'ajuster l'angle d'assise du skieur, le siège 12 étant fixé sur un premier support 33, articulé en C et pouvant être réglé à différents angles grâce à des premières barrettes de réglage 34. Pour pouvoir ajuster au mieux l'angle des jambes du skieur, la coque 13 d'appui des jambes est fixée sur un deuxième support 35, articulé en D et pouvant être réglé à différents angles grâce à des deuxièmes barrettes de réglage 36.

Sur la figure 10, l'embase 21 est fixée sur le sabot 14 chaussant le ski 18 par l'intermédiaire du rail de réglage 20, de façon à pouvoir régler le centre de gravité du dispositif de ski assis à différentes positions du ski.

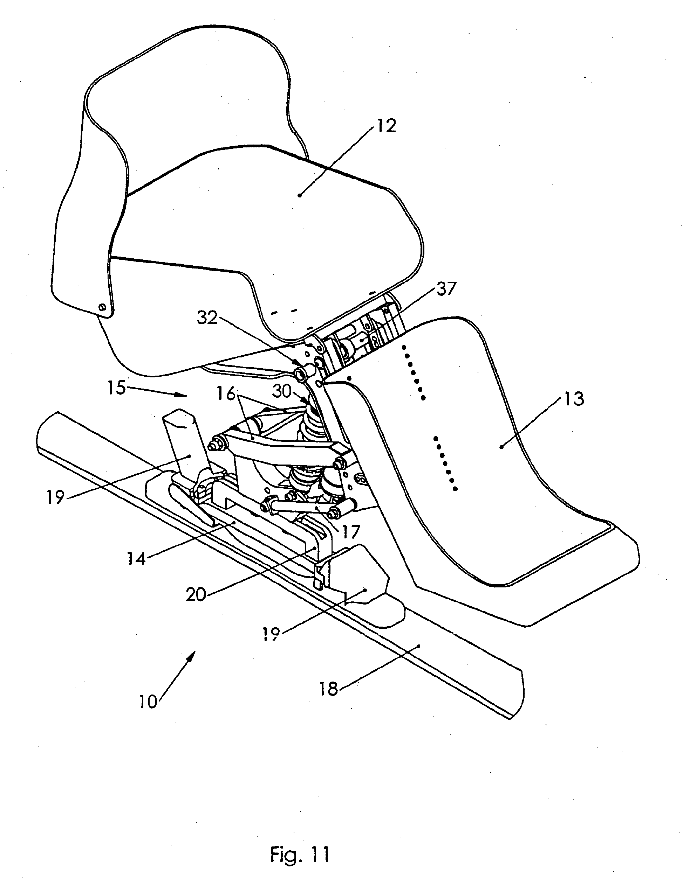

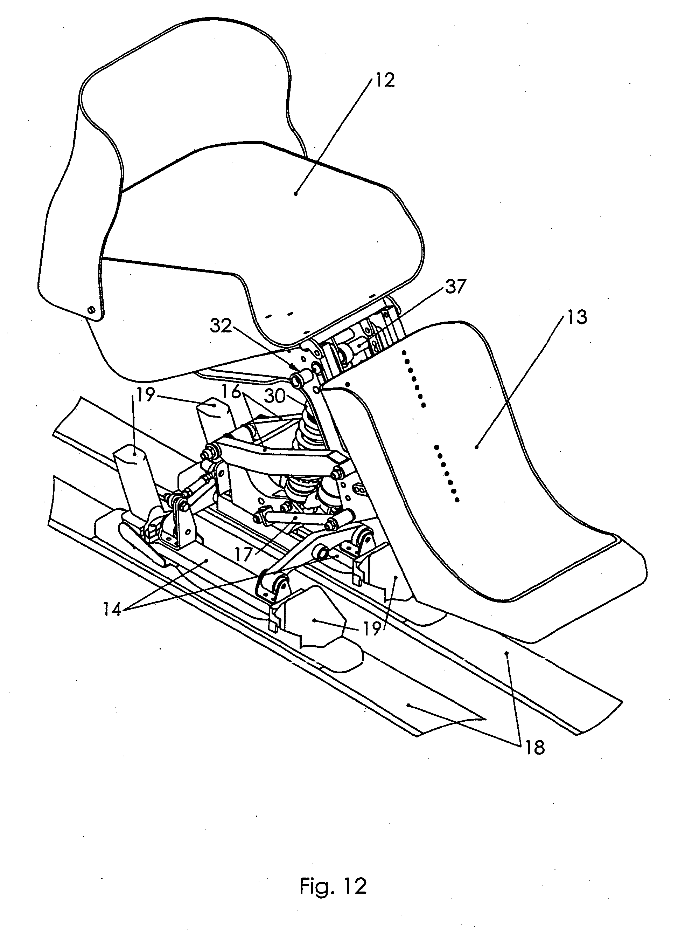

L'appareil est utilisable avec un ski unique (figure 11) ou deux skis (figure 12).

## Revendications

1. Mécanisme de suspension d'un fauteuil de ski assis, comprenant :
- un châssis (11) de support d'un siège (12) monté sur un sabot (14) au moyen d'une cinématique (15) à biellettes (16, 17) formant un quadrilatère déformable,
- un élément amortisseur (30) piloté par un verrou (32) de manoeuvre destiné à occuper une position verrouillée ou une position déverrouillée, respectivement lors de la suspension en position de ski, et lors du relevage du châssis (11) en position de télésiège,
**caractérisé en ce que** le châssis (11) est formé par l'assemblage de deux flasques (24, 25) parallèles symétriques par rapport au plan médian vertical, chaque flasque (24, 25) comportant une pluralité de trous de réglage (27, 28) du positionnement des extrémités amont des biellettes (16, 17) sur le châssis (11), que les extrémités aval des biellettes (16, 17) sont articulées sur une embase (21) solidaire du sabot (14), et que l'axe supérieur (37) de l'élément amortisseur (30) se déplace après déverrouillage du verrou (32) dans une glissière (31) ménagée dans chaque flasque (24,25).

2. Mécanisme de suspension selon la revendication 1, **caractérisé en ce que** la base de l'élément amortisseur (30) est ajustable à différents points de fixation (A, B) de l'embase (21) pour le réglage du rapport d'amortissement.

3. Mécanisme de suspension selon la revendication 1, **caractérisé en ce que** l'embase (21) est réglable par un coulissement le long d'un rail (20) de guidage longitudinal.

4. Mécanisme de suspension selon l'une des revendications précédentes, **caractérisé en ce que** les flasques (24, 25) du châssis (11) sont en forme de L, composés chacun d'une aile supérieure portant le siège (12), et d'une aile inférieure pour le maintien d'une coque (13) d'appui des jambes.

5. Mécanisme de suspension selon la revendication 4, **caractérisé en ce que** le siège (12) est fixé sur un premier support (33) articulé coopérant avec des premières barrettes de réglage (34) pour ajuster l'angle d'assise du skieur.

6. Mécanisme de suspension selon la revendication 4, **caractérisé en ce que** la coque (13) est solidarisée à un deuxième support (35) articulé coopérant avec des deuxièmes barrettes de réglage (36) pour ajuster l'angle des jambes du skieur.

7. Mécanisme de suspension selon l'une des revendications précédentes, **caractérisé en ce que** l'embase (21) est équipée de deux jambes (22, 23) conformées en V, l'une des jambes (22) étant dotée d'une troisième série de trous (29) de réglage utilisés pour la fixation des extrémités aval des biellettes (16, 17).

8. Mécanisme de suspension selon l'une des revendications précédentes, **caractérisé en ce que** le sabot (14) est agencé pour chausser un ski (18) unique.

9. Mécanisme de suspension selon l'une des revendications précédentes, **caractérisé en ce que** le sabot (14) est agencé pour chausser deux skis (18).

## Patentansprüche

1. Aufhängungsmechanismus eines Skibobs, der umfasst:
- einen Rahmen (11), der einen Sitz (12) trägt, mittels einer Kinematik (15) mit Gelenkstangen (16, 17) auf einen Schuh (14) montiert ist und ein verformbares Viereck bildet,
- ein Stoßdämpfungselement (30), das über einen Betätigungsriegel (32) gesteuert wird, der dazu bestimmt ist, eine verriegelte oder entriegelte Position einzunehmen, und zwar jeweils während der Aufhängung in Skifahrposition bzw. während des angehobenen Zustands des Rahmens (11) beim Transport in einem Sessellift,
**dadurch gekennzeichnet, dass** der Rahmen (11) aus der Verbindung zweier paralleler Flansche (24, 25) besteht, die bezüglich der vertikalen Mittelebene symmetrisch sind, wobei jeder Flansch (24, 25) mehrere Regulierungsöffnungen (27, 28) zur Positionierung der vorderen Enden der Gelenkstangen (16, 17) am Rahmen (11) umfasst, dass die hinteren Enden der Gelenkstangen (16, 17) an einen Sockel (21) angelenkt sind, der fest mit dem Schuh (14) verbunden ist und dass sich die obere Achse (37) des Stoßdämpfungselements (30) nach Flansch (24, 25) vorgesehen ist.

2. Aufhängungsmechanismus nach Anspruch 1, **dadurch gekennzeichnet, dass** der untere Teil des Stoßdämptungselements (30) an verschiedenen Befestigungspunkten (A, B) des unteren Teils (21) zur Einstellung des Dämpfungsverhältnisses eingestellt werden kann.

3. Aufhängungsmechanismus nach Anspruch 1, **dadurch gekennzeichnet, dass** der Sockel (21) durch Gleiten entlang einer Längsführungsschiene (20) einstellbar ist.

4. Aufhängungsmechanismus nach einem der vorstehenden Ansprüche, **dadurch gekennzeichnet, dass** die Flansche (24, 25) des Rahmens (11) L-förmig sind und jeweils aus einem oberen Flügel, der den Sitz (12) trägt, und einem unteren Flügel zum Halten einer Auflageschale (13) für die Beine bestehen.

5. Aufhängungsmechanismus nach Anspruch 4, **dadurch gekennzeichnet, dass** der Sitz (12) an einen ersten gelenkig gelagerten Träger (33) montiert ist, der mit ersten Einstellleisten (34) zur Regulierung des Sitzwinkels des Skifahrers zusammenwirkt.

6. Aufhängungsmechanismus nach Anspruch 4, **dadurch gekennzeichnet, dass** die Schale (13) fest verbunden ist mit einem zweiten gelenkig gelagerten Träger (35), der mit zweiten Einstellleisten (36) zur Regulierung des Beinwinkels des Skifahrers zusammenwirkt.

7. Aufhängungsmechanismus nach einem der vorstehenden Ansprüche, **dadurch gekennzeichnet, dass** der Sockel (21) zwei V-förmige Schenkel (22, 23) aufweist, wobei einer der Schenkel (22) mit einer dritten Reihe von Regulierungsöffnungen (29) versehen ist, die zur Befestigung der hinteren Enden der Gelenkstangen (16, 17) verwendet werden.

8. Aufhängungsmechanismus nach einem der vorstehenden Ansprüche, **dadurch gekennzeichnet, dass** der Schuh (14) so ausgeführt ist, dass man einen Ski (18) daran befestigen kann.

9. Aufhängungsmechanismus nach einem der vorstehenden Ansprüche, **dadurch gekennzeichnet, dass** der Schuh (14) so ausgeführt ist, dass man zwei Skier (18) daran befestigen kann.

## Claims

1. Sit-ski chair suspension mechanism, comprising:
- a seat (12) support frame (11) mounted to a shoe (14) by means of kinematics (15) with links (16, 17) forming a deformable quadrangle;
- a damping member (30) controlled by an operation lock (32) serving to occupy a locked position or an unlocked position, respectively, during ski position damping and during lifting back of frame (11) in chairlift position,
- **characterized in that** frame (11) is formed by assembling two symmetrical parallel flanges (24, 25) with respect to the vertical median plane, each flange (24, 25) having a plurality of setting holes (27, 28) of the upstream ends positioning of links (16, 17) on frame (11), **in that** downstream ends of links (16, 17) are articulated on a bracket (21) integral with shoe (14), and **in that** the damping member (30) upper axle (37) moves after lock (32) unlocking inside a sliding track (31) formed in each flange (24, 25).

2. Suspension mechanism according to claim 1, **characterized in that** the damping member (30) base is adjustable in different attaching points (A, B) of bracket (21) to adjust the damping ratio.

3. Suspension mechanism according to claim 1, **characterized in that** bracket (21) is adjustable by sliding along a longitudinal guide rail (20).

4. Suspension mechanism according to one of the previous claims, **characterized in that** frame (11) flanges (24, 25) are L-shaped, each composed of a seat carrying upper wing (12) and of a lower wing to maintain a leg support frame body (13).

5. Suspension mechanism according to claim 4, **characterized in that** seat (12) is mounted to a first articulated support member (33) cooperating with first adjusting bars (34) to set the skier seat inclination angle.

6. Suspension mechanism according to claim 4, **characterized in that** frame body (13) is integral with an articulated second support member (35) cooperating with second adjusting bars (36) to set the skier leg angle.

7. Suspension mechanism according to one of the previous claims, **characterized in that** bracket (21) is provided with two structural legs (22, 23) forming a V shape, one of said legs (22) being provided with a third series of setting holes (29) used to attach links (16, 17) downstream ends.

8. Suspension mechanism according to one of the previous claims, **characterized in that** shoe (14) is arranged to have a sole ski (18) mounted thereto.

9. Suspension mechanism according to one of the previous claims, **characterized in that** shoe (14) is arranged to have a pair of skis (18) mounted thereto.
